# EUROPEAN PATENT APPLICATION

(11) **EP 2 974 846 A1**
(43) Date of publication of application: **20.01.2016**
(21) Application number: 14874187.9
(22) Date of filing: 03.11.2014
(51) Int. Cl.: B29C 49/64

(54) **BOTTLE BLANK HEATING AIR CHANNEL FOR BOTTLE BLOWING MACHINE**

(30) Priority: 25.12.2013 CN 201310724760
(71) Applicant: Guangzhou Tech-Long Packaging Machinery Co., Ltd, Guangzhou, Guangdong 510530 (CN)
(72) Inventor: DEGN, Zhijun, Guangzhou Guangdong 510530 (CN); GUO, Limin, Guangzhou Guangdong 510530 (CN); LIU, Ling, Guangzhou Guangdong 510530 (CN); WANG, Yanfeng, Guangzhou Guangdong 510530 (CN); ZHANG, Wei, Guangzhou Guangdong 510530 (CN)
(74) Representative: von Kreisler Selting Werner - Partnerschaft von Patentanwälten und Rechtsanwälten mbB
(86) International application number: PCT/CN2014/090164
(87) International publication number: WO 2015/096554

(57) **Abstract**

Disclosed in the present invention is a bottle blank heating air channel for a bottle blowing machine. The heating air channel comprises an air inlet channel and an air outlet channel. The air inlet channel comprises a bottleneck air channel and a bottle body air channel and the air outlet channel comprises a bottleneck air outlet channel and a bottle body air outlet channel. The bottleneck air outlet channel is a space surrounded by the bottle body air outlet channels at two sides. The cold air for cooling the bottleneck and the bottle body are respectively controlled by different air inlet channels, and the air quantity and air quantity proportion are adjustable, so that a device runs more stably, the air guide effect is more accurate, the technological requirements of different parts of a bottle blank are met, the quality of products is improved. The bottle blank heating air channel is simple in structure, utilizes space effectively, and can be used for reducing the device quantity and the production cost.

## Description

### Technical field

The invention relates to a bottle blowing machine, in particular to a bottle blank heating air channel for a bottle blowing machine.

### Technical background

The bottle blank is put into the heating workstation and is heated by the bottle blowing machine. In order to get ideal bottle blanks, it is necessary to heat the whole bottle body of the bottle blank uniformly except the bottleneck, and raise the temperature gradually to a predetermined temperature of 90 to 120 °C. At the same time, in order to be enable the subsequent bottle blanks to enter the heating stations continuously uninterruptedly for being heated one by one, the environmental temperature of the heating channel area shall be kept within a certain temperature range. And when the bottle body in the heating channel is heated by the infrared heating tube, the whole relatively semi-closed heating channel area will inevitably be heated. Therefore, it is necessary to remove the heat from the heating channel area for realizing continuous heating of the bottle blanks successively. On the other hand, the bottleneck shall be kept in moral temperature state as far as possible when blowing a bottle. Therefore, when the bottleneck entering the heating channel area, the heat in the bottleneck area shall be removed as far as possible.

The existing bottle blank heating air channel of the bottle blowing machine comprises a main air channel for feeding air, and a air deflector fixed on the device rack. The air deflector guide the cold air fed from the main air channel onto the bottleneck and bottle body respectively for air cooling, keeping the bottleneck and bottle body at the desired temperature respectively before proceeding to the next step. The air deflector is designed in a fixed mode with a fixed proportion of the air quantity being guided to the bottleneck over that to the bottle body, and the air distribution proportion cannot be changed in the working process. But in the actual production, due to the presence of manufacturing and assembling errors, the air distribution proportion of the air quantity formed by the air deflector cannot reach the desired setting, leading to failure in achieving ideal preheating temperature when blowing a bottle with a bottle blank.

### Summary of the invention

The invention aims at providing a bottle blank heating air channel for a bottle blowing machine capable to feed air separately to the bottleneck and bottle body of the bottle blank, so as to improve the heating effect and meet the different heating requirements for the bottleneck and the bottle body.

The invention relates to a bottle blank heating air channel for a bottle blowing machine, comprising an air inlet channel and an air outlet channel. The air inlet channel comprises a bottleneck air channel for guiding the air to the bottleneck and a bottle body air channel for guiding the cold air to the bottle body; the air outlet channel comprises a bottleneck air outlet channel for exhausting the hot air having cooled the bottleneck and a bottle body air outlet channel for exhausting the hot air having cooled the bottle body.

In the bottle blank heating air channel of bottle blowing machine of the invention, provided are the air inlet channels for guiding the cold air to the bottleneck and the bottle body of the bottle blank, and the air outlet channels corresponding to the air inlet channels for guiding out the hot air having cooled the bottleneck and the bottle body to the air outlet channels respectively. During operation, the cold air enters via the bottleneck air channel and the bottle body air channel respectively and are guided to the bottleneck and the bottle body, and then the bottleneck and the bottle body are cooled by the cold air respectively. Finally, the hot air having cooled the bottleneck is exhausted vie the bottleneck air outlet channel and the hot air having cooled the bottle body is exhausted vie the bottle body air outlet channel. The cold air for cooling the bottleneck and the bottle body are respectively controlled by different air inlet channels, and the air quantity and the quantity proportion are adjustable, so that a device runs more stably, the air guide effect is more accurate, the technological requirements of different parts of a bottle blank are met, the quality of products is improved.

### Description of drawings

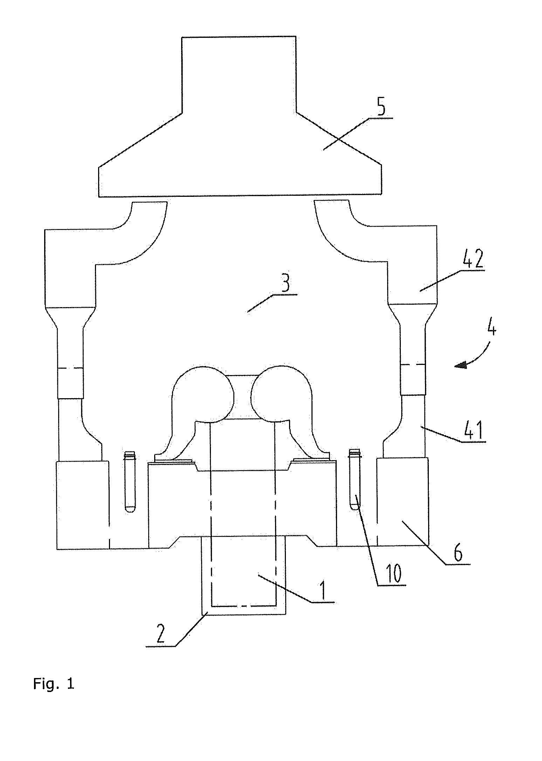

Figure 1 is a schematic diagram of the structure of a bottle blank heating air channel for a bottle blowing machine.

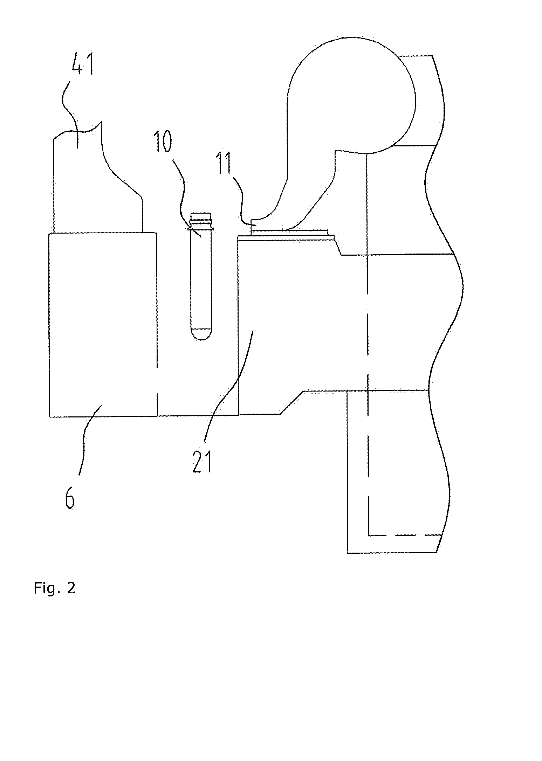

Figure. 2 is a local schematic diagram of the bottle blank heating air channel for bottle blowing machine shown in Figure 1.

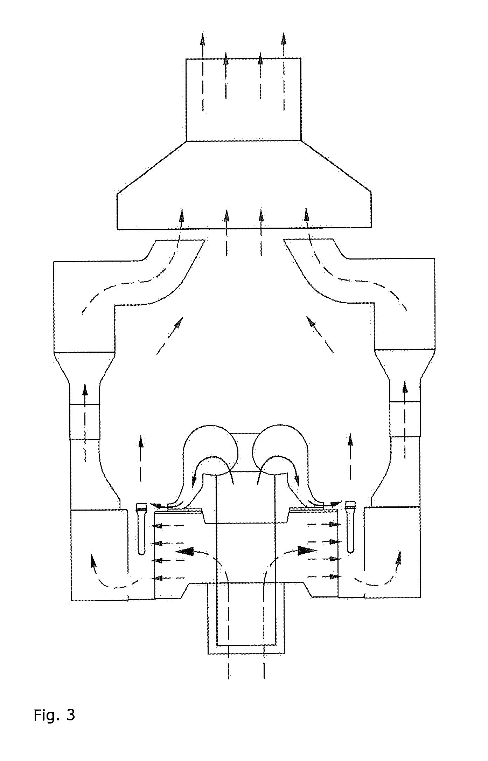

Figure. 3 is a schematic diagram of the air flow in the bottle blank heating air channel for bottle blowing machine shown in Figure 1.

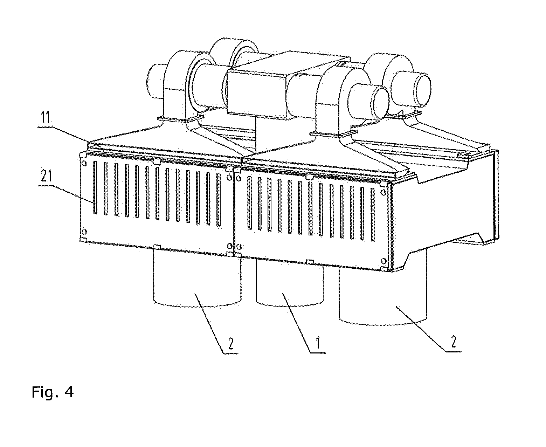

Figure. 4 is a schematic diagram of the structure of the air inlet channel of the bottle blank heating air channel for bottle blowing machine shown in Figure 1.

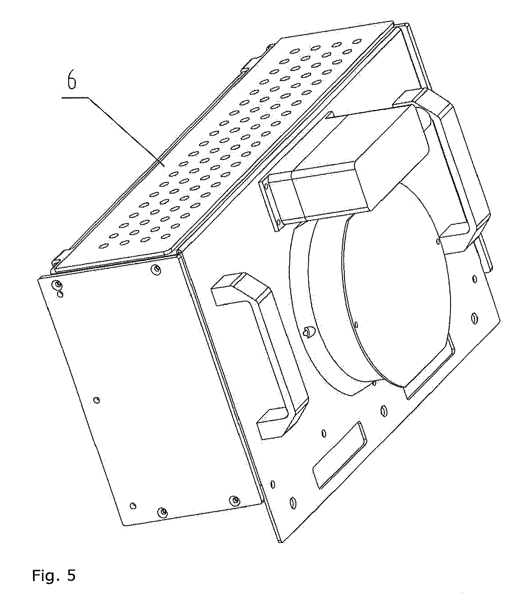

Figure 5 is a schematic diagram of the structure of the heating box of the bottle blank heating air channel for bottle blowing machine shown in Figure 1.

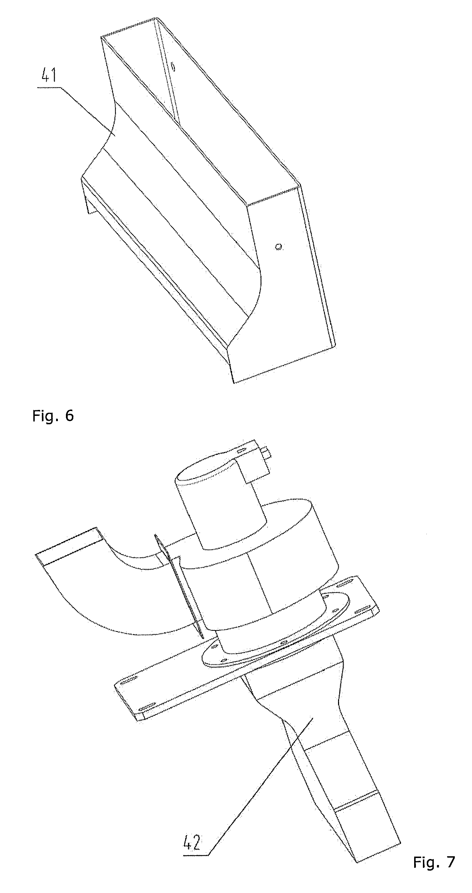

Figure 6 is a schematic diagram of the lower air outlet channel of the bottle blank heating air channel for bottle blowing machine shown in Figure 1.
Figure 7 is a schematic diagram of the upper air outlet channel of the bottle blank heating air channel for bottle blowing machine shown in Figure 1.

### Embodiment

A bottle blank heating air channel for a bottle blowing machine. The heating air channel comprises an air inlet channel and an air outlet channel. The air inlet channel comprises a bottleneck air channel 1 for guiding the cold air to the bottleneck and a bottle body air channel 2 for guiding the cold air to the bottle body. The air outlet channel comprises a bottleneck air outlet channel 3 for exhausting the hot air having cooled the bottleneck and a bottle body air outlet channel 4 for exhausting the hot air having cooled the bottle body. The cold air for cooling the bottleneck and the bottle body are respectively controlled by different air inlet channels, and the air quantity and air quantity proportion are adjustable, so that the device runs more stably, the air guide effect is more accurate, the technological requirements of different parts of a bottle blank are met, the quality of products is improved.

In the said bottle blank heating air channel for a bottle blowing machine, the bottleneck air channel air outlet 11 of the bottleneck air channel 1 is provided above the bottle body air channel air outlet 21 of the bottle body air channel 2, and both of them are perpendicularly pointing to the bottleneck and bottle body of the bottle blank respectively. The airflow educed from the bottleneck air channel and the bottle body air channel is blown perpendicularly to the bottleneck and the bottle body respectively, improving the cold air utilization rate and operation efficiency. The two streams of cold air are blown out parallel, without interference with each other, so that the operation effect becomes more accurate, stable, reducing the interference therebetween and avoiding generation of turbulence, thus further improving the operation efficiency and the cooling effect.

In the said bottle blank heating air channel for a bottle blowing machine, the air inlet of the bottle body air outlet channel 4 is provided below the bottle body of the bottle blank. The airflow having cooled the bottle body of the bottle blank enters the bottle body air outlet channel via the air inlet below, thus the airflow acting on the bottle body and the airflow acting on the bottleneck may be separated properly from each other and operate independently. And it keeps the heat away from the bottleneck of the bottle blank and reduces its impact on the bottleneck.

In the said bottle blank heating air channel for a bottle blowing machine, the bottle body air channel 2 comprises two bottle body air channel air outlets 21 pointing to different bottle blanks respectively. The bottleneck air channel 1 comprises two bottleneck air channel air outlets 11 pointing to different bottle blanks respectively, and the two bottleneck air channel air outlets 11 are provided above the two bottle body air channel air outlets 21 respectively. The bottle body air outlet channel 4 comprises two side air outlet channels for guiding the hot air exhausted from the two bottle body air outlets. The bottleneck air outlet channel 3 is a space surrounded by the air outlet channels at two sides, and the bottleneck air outlet channel 3 connects the two bottleneck air channel air outlets 11 at the same time and guides the hot air exhausted therefrom. A main air outlet channel 5 is provided to connect the bottleneck air outlet channel 3 and the bottle body air outlet channel 4 at the same time. The bottleneck air channel and the bottle body air channel are provided with two air outlets each. The two air outlets operate for cooling of different bottle blanks and greatly improve the operating efficiency. The two bottle body air outlet channels are correspondingly provided with air outlet channels at two sides, conducive to improve the working stability and accuracy. A space is formed and surrounded by the external walls at the opposite side of the air outlet channels at two sides, and the space is the bottleneck air channel. Its simple structure and effective use of space can reduce the device volume and the production cost. Setting up of the main air outlet channel provides centralized treatment of the hot air exhausted from the bottleneck air outlet channel and the bottle body air outlet channel, which is conducive to the follow-up work and provides simple and pretty device appearance.

In the said bottle blank heating air channel for a bottle blowing machine, a heating box 6 is provided. The heating box 6 is set on the opposite side of the bottle body air outlet 21, and a space for the bottle blank 10 is formed between them. A ventilating channel is provided on the heating box 6, whose air outlet is connected to the air inlet of the bottle body air outlet channel 4. A ventilating channel is provided on the heating box, and it may be cooled by the cooling airflow. And the air outlet is connected to the bottle body air outlet, thus reduce the quantity of separate air outlet channels to be set up and improve the device utilization rate, and is conductive to the centralized treatment of the hot air.

In the said bottle blank heating air channel for a bottle blowing machine, the bottle body air outlet channel 4 comprises a lower air outlet 41 at the below for the hot air to enter, and the upper air outlet 42 at the above for the hot air. The upper and lower air outlet channels are hermetically connected. The hot air enters via the lower air outlet channel and discharges via the upper air outlet. The upper and lower air outlet channels may be arranged into different shapes according to the actual needs, being conducive to the design and production of the bottleneck air outlet channel between the side air outlet channel and the air outlet channels at two sides, and convenient for device assembly and maintenance.

In the said bottle blank heating air channel for a bottle blowing machine, the air inlet channel comprises several said bottleneck air channels 1 and bottle body air channels 2, arranged along the production with spacing. Multi bottleneck air channels and bottle body air channels are arranged along the production line corresponding to the heating workstations for bottle blanks. These different heating stations can be set at different temperatures, for example increasing gradually along the conveying direction on the production line. During operation, the bottle blanks arranged and run along the production line may be heated gradually along these workstations, without the need of being fixed in a position for heating and then sent out, thus greatly improving the work efficiency. Alternately, the air inlet channel air outlet corresponding to these heating workstations may be connected to different refrigeration equipment with different cooling effects, thus the cooling may be applied with specific pertinence, greatly improving the applicability of the device.

## Claims

1. A bottle blank heating air channel for a bottle blowing machine, including an air inlet channel and an air outlet channel, **characterized by** that the air inlet channel comprises a bottleneck air channel (1) for guiding the cold air to the bottleneck and a bottle body air channel (2) for guiding the cold air to the bottle body; the air outlet channel comprises a bottleneck air outlet channel (3) for exhausting the hot air having cooled the bottleneck and a bottle body air outlet channel (4) for exhausting the hot air having cooled the bottle body.

2. The bottle blank heating air channel for a bottle blowing machine according to Claim 1, **characterized by** that a bottleneck air outlet (11) of the bottleneck air channel (1) is provided above the bottle body air outlet (21) of the bottle body air channel (2), and both of them are perpendicularly pointing to the bottleneck and bottle body of the bottle blank respectively.

3. The bottle blank heating air channel for a bottle blowing machine according to Claim 1 or 2, **characterized by** that the air inlet of the bottle body air outlet channel (4) is provided below the bottle body of the bottle blank.

4. The bottle blank heating air channel for a bottle blowing machine according to Claim 1, **characterized by** that the bottle body air channel (2) comprises two bottle body air channel air outlets (21) respectively pointing to different bottle blanks, the bottleneck air channel (1) comprises two bottleneck air channel air outlets (11), and the two bottleneck air channel air outlets (11) are provided above the two bottle body air channel air outlets(21) respectively.

5. The bottle blank heating air channel for a bottle blowing machine according to Claim 4, **characterized by** that the bottle body air outlet channel (4) comprises two side air outlet channels for guiding the cold air exhausted from the two bottle body air channel air outlets (21) respectively; the bottleneck air outlet (3) is a space surrounded by the air outlet channels at two sides, and the bottleneck air outlet (3) connects the two bottleneck air channel air outlets (11) and guides the cold air exhausted from them.

6. The bottle blank heating air channel for a bottle blowing machine according to Claim 1 or 5, **characterized by** that a main air outlet channel (5) is provided to connect the bottleneck air outlet channel (3) and the bottle body air outlet channel (4) at the same time.

7. The bottle blank heating air channel for a bottle blowing machine according to Claim 1, **characterized by** that a heating box (6) is provided, the heating box (6) is set on the opposite side of the bottle body air channel air outlet (21), a space for the bottle plank (10) is formed between them, and a ventilating channel is provided on the heating box (6), and the air outlet of the ventilating channel is connected to the air inlet of the bottle body air outlet channel (4).

8. The bottle blank heating air channel for a bottle blowing machine according to Claim 1, **characterized by** that the bottle body air outlet channel (4) comprises a lower air outlet channel (41) at the below for the hot air to enter, and a upper air outlet channel (42) at the above for exhausting the hot air, the upper and lower air outlet channels are connected to each other hermetically.

9. The bottle blank heating air channel for a bottle blowing machine according to Claim 1, **characterized by** that the air inlet channel comprises several said bottleneck air channels (1) and bottle body air channels (2) provided along the production direction with spacing.
